Europäisches Patentamt

European Patent Office

Office européen des brevets

(11) Veröffentlichungsnummer: **0 379 089**

**A2**

(12) **EUROPÄISCHE PATENTANMELDUNG**

(21) Anmeldenummer: **90100621.3**

(22) Anmeldetag: **12.01.90**

(51) Int. Cl.⁵: **F16F  9/32**

(30) Priorität: **20.01.89 DE 3901526**

(43) Veröffentlichungstag der Anmeldung:
**25.07.90 Patentblatt  90/30**

(84) Benannte Vertragsstaaten:
**CH DE FR GB IT LI NL SE**

(71) Anmelder: **Steinhilber, Friedhelm**
**Schauinslandweg 13**
**D-7210 Rottweil(DE)**

(72) Erfinder: **Steinhilber, Friedhelm**
**Schauinslandweg**
**D-7210 Rottweil(DE)**
Erfinder: **Bantle, Ludwig**
**Wiesenstrasse 40**
**D-7215 Bösingen(DE)**
Erfinder: **Fröchte, Heinz**
**Beethovenstr. 6**
**D-7214 Zimmern(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen(DE)**

(54) **Hydraulischer Teleskopdämpfer.**

(57) Es wird ein Teleskopdämpfer beschrieben, bei welchem der Zylinder aus einem Innenrohr (10) besteht, das in einem Gehäuse eingeschlossen ist. Das Gehäuse wird von zwei miteinander verrastbaren Gehäuseteilen (12,14) gebildet. Die fluiddichte Montage des Zylinders erfolgt durch einfaches Verrasten der Gehäuseteile (12,14).

EP 0 379 089 A2

Fig. 1

## Teleskopdämpfer

Die Erfindung betrifft einen Teleskopdämpfer gemäß dem Oberbegriff des Anspruchs 1.

Solche Teleskopdämpfer sind in zahlreichen Ausführungen bekannt. Wesentliche Bestandteile dieser Dämpfer sind ein das Dämpfungsfluid aufnehmender Zylinder und ein in diesem Zylinder bewegbarer mit einer Kolbenstange versehener Kolben. Das Dämpfungsfluid in dem Zylinder erzeugt einen Strömungswiderstand für die Bewegung des Kolbens, wodurch eine Dämpfung der axialen Relativbewegung zwischen Zylinder und Kolbenstange bewirkt wird. Es ist dabei auch bekannt, einen konstanten Durchlaß und ein Rückschlagventil für das Dämpfungsfluid vorzusehen. Das Rückschlagventil öffnet bei einer Bewegungsrichtung des Kolbens und ermöglicht eine schnelle Bewegung des Kolbens in dieser Richtung mit geringem Widerstand. In der anderen Bewegungsrichtung des Kolbens schließt das Rückschlagventil, so daß das Dämpfungsfluid nur durch den konstanten Durchlaß mit hohem Strömungswiderstand hindurchtreten kann. Der Kolben führt in dieser Richtung eine gedämpfte Bewegung mit hohem Widerstand und geringer Geschwindigkeit aus.

Aus der DE-OS 29 00 610 ist ein Gasdruck-Federelement bekannt, bei welchem der Zylinder ein den Kolben führendes Rohr ist, das an einem Ende durch einen aufgeschweißten Deckel verschlossen ist. In das andere Ende des Rohres ist eine Dichtungsanordnung eingesetzt und durch einen ungebördelten Rand des Rohres gehalten. Die Dichtungsanordnung dichtet einerseits die axial hindurchgeführte Kolbenstange ab und liegt andererseits abdichtend an der Innenwand des Rohres an. Das Aufschweißen des Deckels, das Einsetzen der Dichtungsanordnung und das Umbördeln des Rohres machen die Herstellung und Montage aufwendig. An das Dichtelement, das sowohl am Außenumfang der Kolbenstange als auch am Innenumfang des Zylinders dichtend anliegt, müssen hohe Anforderungen gestellt werden.

Die DE-AS 22 25 342 zeigt eine Gasfeder mit einem den Kolben führenden Innenrohr und einem dieses Innenrohr umschließenden Außenrohr, wobei zwischen Innenrohr und Außenrohr ein Ringkanal für das Füllgas gebildet ist. Das Außenrohr wird an beiden axialen Enden durch eingesetzte Stopfen mit Dichtringen abgedichtet, die durch eine Umbördelung gehalten werden. Auch hier ist die Abdichtung in der Montage aufwendig.

Die DE-OS 26 54 056 zeigt einen Teleskopdämpfer mit einem aus einem Rohr bestehenden, den Kolben führenden Zylinder. Der Zylinder ist an seinem axialen Ende durch einen eingesetzten Stopfen abgedichtet, der mit einem Sprengring in dem Zylinder eingerastet ist. Der Stopfen dichtet die hindurchgeführt Kolbenstange ab. Zum Einrasten des Stopfens muß das den Zylinder bildende Rohr mit einer konischen Einlaufschräge und einer ringförmigen Nut in der Innenwandung versehen sein. Dies macht die Herstellung aufwendig.

Das DE-GM 71 11 581 zeigt einen Teleskopdämpfer, dessen Zylinder von einem äußeren Schutzrohr umschlossen ist. Das aus Kunststoff bestehende Schutzrohr ist mit der abgedichtet aus dem Zylinder herausgeführten Kolbenstange fest verbunden und mit dieser axial verschiebbar. Das offene Schutzrohr ist mit Rastnasen in einen mit der Kolbenstange fest verbundenen Teller eingerastet. Eine Abdichtung des Schutzrohres ist nicht vorgesehen.

Diese bekannten Teleskopdämpfer sind in der Herstellung und der Montage aufwendig. Diese aufwendige Konstruktion und Montage ist besonders nachteilig bei kleinen Teleskopdämpfern, wie sie z.B. zur Dampfung der Schließbewegung von Gerätedeckeln und -klappen eingesetzt werden.

Der Erfindung liegt die Aufgabe zugrunde, einen Teleskopdämpfer zu schaffen, der aufgrund seines konstruktiv einfachen Aufbaus und seiner einfachen Montage preisgünstig ist.

Diese Aufgabe wird bei einem Teleskopdämpfer der eingangs genannten Gattung erfindungsgemäß gelöst durch die kennzeichnenden Merkmale des Anspruchs 1.

Vorteilhafte Ausführungsformen und Weiterbildungen der Erfindung sind in den Unteransprüchen angegeben.

Bei dem erfindungsgemäßen Teleskopdämpfer besteht der das Dämpfungsfluid aufnehmende und den Kolben führende Zylinder aus einem Innenrohr, das vorzugsweise aus Metall, z.B. aus Messing, besteht, und einem dieses Innenrohr umschließenden Gehäuse. Das Gehäuse besteht aus zwei Gehäuseteilen, die im wesentlichen topfförmig ausgebildet sind und mit ihrem Boden die Enden des Innenrohres dichtend verschließen. Die beiden Gehäuseteile umgreifen das Innenrohr an dessen Außenumfang und sind außerhalb des Innenrohres axial miteinander verrastbar. Die gesamte Abdichtung des Zylinders kann auf diese Weise konstruktiv äußerst einfach zwischen den axialen Enden des Innenrohres und den Böden der Gehäuseteile erfolgen. Zur Montage müssen nur die beiden Gehäuseteile von den entgegengesetzten Enden auf das Innenrohr geschoben und miteinander verrastet werden. Es sind somit keine in Herstellung und Montage aufwendigen Verbindungen erforderlich.Die Rastverbindung der beiden Gehäuseteile kann konstruktiv äußerst einfach sein, da das Gehäuse im Bereich der Rastverbindung nicht dicht sein muß. Die beiden Gehäuseteile können insbesondere einstückige Kunststoffteile sein, die preisgünstig im Spritzgußverfahren hergestellt werden können.

Im folgenden wird die Erfindung anhand eines in der Zeichnung dargestellten Ausführungsbeispiels näher erläutert. Es zeigen

Figur 1 einen Axialschnitt des Teleskopdämpfers,

Figur 2 einen Figur 1 entsprechenden Axialschnitt des einen Gehäuseteils,

Figur 3 einen um 90° gedrehten Axialschnitt dieses Gehäuseteils,

Figur 4 eine Stirnansicht des Gehäuseteils nach Figur 2 von rechts,

Figur 5 eine Stirnansicht des Gehäuseteils nach Figur 2 von links,

Figur 6 einen Figur 1 entsprechenden Axialschnitt des zweiten Gehäuseteils,

Figur 7 einen um 90° gedrehten Axialschnitt dieses Gehäuseteils,

Figur 8 eine Stirnansicht des Gehäuseteils nach Figur 6 von rechts und

Figur 9 eine Stirnansicht des Gehäuseteils nach Figur 6 von links.

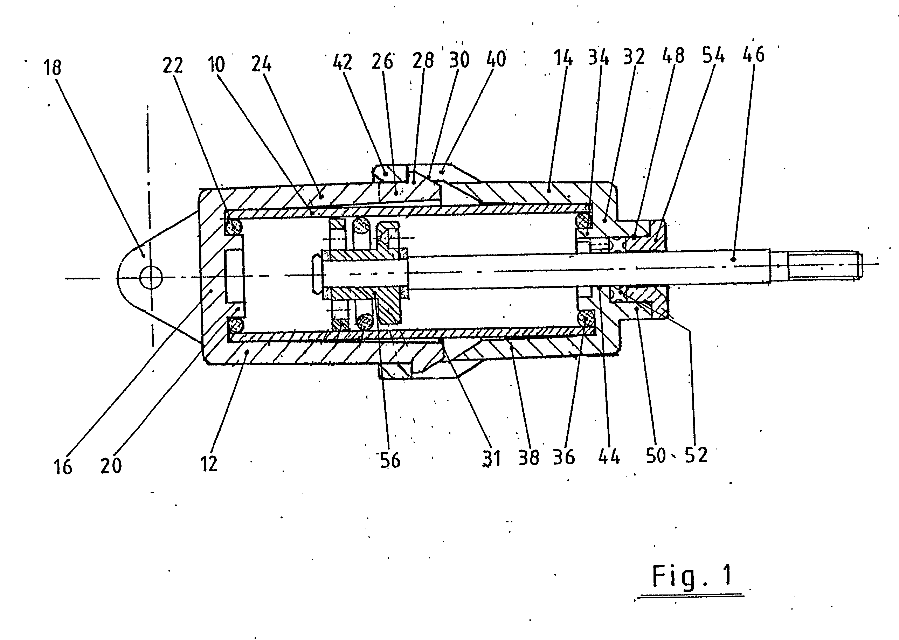

Der in Figur 1 im zusammengebauten Zustand dargestellte hydraulische Teleskopämpfer weist ein Innenrohr 10 auf, das aus Metall, vorzugsweise aus Messing besteht. Das Innenrohr ist in einem Gehäuse gekapselt, welches aus zwei Gehäuseteilen 12 und 14 besteht. Die beiden Gehäuseteile 12 und 14 sind jeweils topfförmig ausgebildete, einstückige Kunststoff-Spritzgußteile. Die Gehäuseteile 12 und 14 werden von den entgegengesetzten Enden auf das Innenrohr 10 geschoben und an ihrer etwa in der axialen Mitte des Innenrohres 10 liegenden Stoßstelle miteinander verrastet.

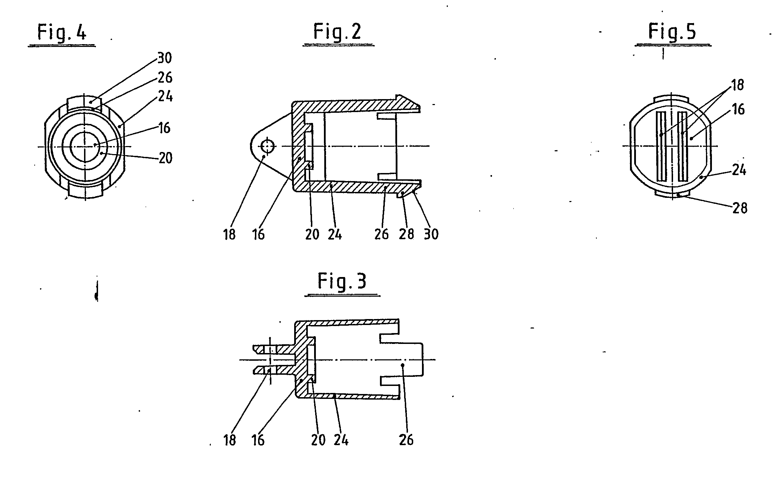

Das in Figur 1 linke Gehäuseteil 12 ist in den Figur 2 bis 5 im einzelnen dargestellt. Das Gehäuseteil 12 weist einen kreisscheibenförmigen Boden 16 auf, der das axiale Ende des Innenrohre 10 verschließt. Aussen an dem Boden 16 sind zwei Aufhängungsösen 18 angeformt, die zur Befestigung des Teleskopdämpfers dienen. Innen an dem Boden ist konzentrisch ein zylinderringförmiger Ansatz 20 angeformt, der koaxial in das Innenrohr 10 eingreift. In einen zwischen dem Aussenumfang dieses Ansatzes 20 und der Innenwandung des Innenrohres 10 verbleibenden Ringraum wird ein O-Ring 22 eingesetzt, der die Abdichtung zwischen dem Innenrohr 10 und dem boden 16 des Gehäuseteiles 12 bewirkt.

Das Gehäuseteil 12 weist an den Boden 16 anschließend eine Wandung 24 auf, die zunächst zylindrisch ausgebildet ist und dicht am Aussenumfang des Innenrohres 10 anliegt. Die Wandung 24 erweitert sich dann konisch mit einem kleinen Kegelwinkel von wenigen Grad. An dem sich erweiternden offenen axialen Ende des Gehäuseteils 12 sind zwei diametral zueinander angeordnete axial vorspringende federnde Zungen 26 ausgebildet, die eine nach aussen vorspringende Rastnase 28 und eine Auflaufschräge 30 aufweisen, die vom freien Ende der Zunge 26 nach aussen ansteigt. Aufgrund der konischen Erweiterung der Wandung 24 in Bereich der Zungen 26 verbleibt zwischen den Zungen 26 und dem Innenrohr 10 ein Spalt 31, der eine federnde Ausweichbewegung der Zungen 26 nach innen gegen das Innenrohr 10 erlaubt.

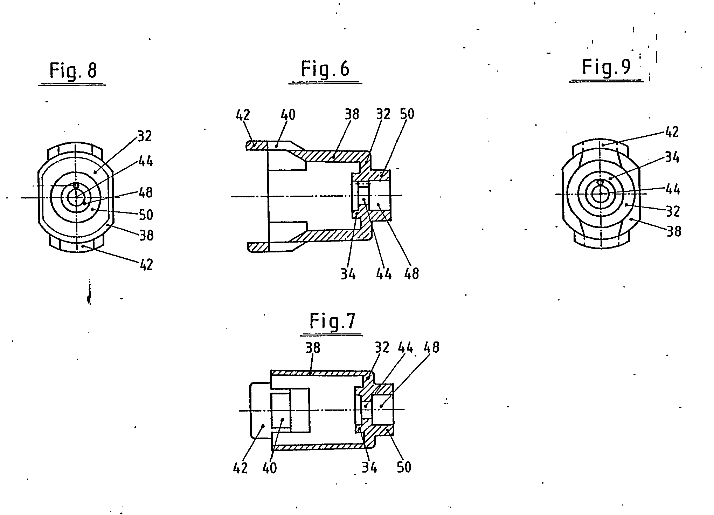

Das zweite in Figur 1 rechte Gehäuseteil 14 ist in den Figuren 6 bis 9 im einzelnen dargestellt. Auch das Ge häuseteil 14 ist topfförmig ausgebildet und weist einen Boden 32 auf, der das axiale Ende des Innenrohres 10 dichtend abschließt. Der Boden 32 greift mit einem zylinderringförmigen Ansatz 34 koaxial in das Innenrohr 10, wobei zwischen dem Aussenumfang des Ansatzes 34 und der Innenwand des Innenrohres 10 ein ringförmiger Raum verbleibt, in welchen ein O-Ring 36 eingesetzt wird, der die Abdichtung zwischen dem Boden 32 und dem Innenrohr 10 bewirkt.

An den Boden 32 schließt sich eine zylindrische Wandung 38 an, die aussen am Umfang des Innenrohres 10 anliegt. Am offenen axialen Ende des Wandung 38 sind diametral zueinander zwei Rastausnehmungen 40 ausgebidet. Die Rastausnehmungen 40 sind jeweils durch einen axial vorspringenden Bügel 42 gebildet, der um die Stärke der Wandung 24 des anderen Gehäuseteils 12 radial nach aussen gegenüber der Wandung 38 versetzt ist.

Werden die beiden Gehäuseteile 12 und 14 von den entgegengesetzten Enden auf das Innenrohr 10 geschoben, so gleiten die Bügel 42 auf den Auflaufschrägen 30 der Rastnasen 28 nach aussen, wobei die Zungen 26 federnd nach innen gegen das Innenrohr 10 gedrückt werden. Sobald die Bügel 42 über die Rastnasen 28 hinweggeschoben sind, greifen die Rastnasen 28 federnd hinter die Bügel 42 in die Rastausnehmungen 40. Die Gehäuseteile 12 und 14 sind auf diese Weise allein durch axiales Zusammenschieben ohne sonstige Montagemaßnahmen unverlierbar miteinander verclipst. Da der Fluidraum des Zylinders von dem Innenrohr 10 gebildet wird, das durch die Böden 16 bzw. 32 der Gehäuseteile 12 bzw. 14 dicht abge schlossen ist, ist eine Abdichtung an der Stoßverbindung der Gehäuseteile 12 und 14 und an deren Verrastung nicht erforderlich.

Mittig in dem Boden 32 des Gehäuseteils 14 ist eine Durchtrittsöffnung 44 vorgesehen. In der Durchtrittsöffnung 44 ist axial verschiebbar eine Kolbenstange 46 geführt. Axial nach außen an die Durchtrittsöffnung 44 anschließend ist eine sacklochartige Erweiterung 48 vorgesehen, die durch einen zylindrischen axialen Ansatz 50 des Bodens 32 gebildet wird. In die Erweiterung 48 ist eine ringförmige Stangendichtung 52 eingelegt, die die Durchtrittsöffnung 44 am Umfang der Kolbenstange 46 abdichtet. Eine Buchse 54, die in die Erweiterung 48 eingepreßt ist, hält die Stangendichtung 52 in dichtender Anlage an der Kolbenstange 46 und dem Boden 32.

Auf das innere Ende der Kolbenstange 46 ist ein Kolben 56 aufgesetzt, der bei seiner Bewegung in dem das Dämpfungsfluid aufnehmenden Innenrohr 10 einen starken die Bewegung dämpfenden Strömungswiderstand bietet.

**Ansprüche**

1. Teleskopdämpfer mit einem Zylinder, der ein einen Kolben führendes Innenrohr aufweist, und mit einer abgedichtet aus dem Zylinder herausgeführten Kolbenstange, dadurch gekennzeichnet, daß das den Kolben (56) führende Innenrohr (10) des Zylinders von einem Gehäuse umschlossen ist, das aus zwei topfförmigen Gehäuseteilen (12,14) besteht, von denen jedes mit seinem Boden (16,32) jeweils ein Ende des Innenrohres (10) dichtend verschließt und die außerhalb des Innenrohres (10) axial miteinander verrastbar sind.

2. Teleskopdämpfer nach Anspruch 1, dadurch gekennzeichnet, daß die Gehäuseteile (12,14) einstückige Kunststoffteile sind.

3. Teleskopdämpfer nach Anspruch 2, dadurch gekennzeichnet, daß ein Gehäuseteil (12) mit axial vorspringenden federnden radialen Rastnasen (28) in Rastausnehmungen (40) des anderen Gehäuseteils (14) eingreift.

4. Teleskopdämpfer nach Anspruch 3, dadurch gekennzeichnet, daß zwei diametral angeordnete Rastnasen (28) vorgesehen sind.

5. Teleskopdämpfer nach einem der vorhergehenden Ansprüche, dadurch gekennzeichnet, daß die Gehäuseteile (12 bzw. 14) an ihrem das Innenrohr (10) verschließenden Boden (16 bzw. 32) einen axial in das Innenrohr (10) eingreifenden zylinderringförmigen Ansatz (20 bzw. 34) aufweisen und daß zur Abdichtung ein O-Ring (22 bzw. 36) zwischen diesen Ansatz (20 bzw. 34) und die Innenwand des Innenrohres (10) eingesetzt ist.

6. Teleskopdämpfer nach einem der vorhergehenden Ansprüche, dadurch gekennzeichnet, daß der von der Kolbenstange (46) durchsetzte Boden (32) des einen Gehäuseteils (14) eine die Kolbenstange (46) führende Durchtrittsöffnung (44) mit einer nach außen axial anschließenden sacklochartigen Erweiterung (48) aufweist und daß in diese Erweiterung (48) eine Stangendichtung (52) eingelegt und durch eine in die Erweiterung (48) eingepreßte Buchse (54) gehalten ist.

18   22   10   24   42   26   28   30   40   14   34   32   48   54   46

16   20   12   56   31   38   36   44   50   52

EP 0 379 089 A2

Fig. 1

## Fig. 4

30
26
24
16
20

## Fig. 2

18  16  20  24  26  28  30

## Fig. 5

18
16
24
28

## Fig. 3

18  16  20  24  26

EP 0 379 089 A2

Fig. 9

Fig. 6

Fig. 7

Fig. 8